Europäisches Patentamt

European Patent Office

Office européen des brevets

(19)

(11) EP 0 413 641 B1

(12) FASCICULE DE BREVET EUROPEEN

(45) Date de publication et mention
de la délivrance du brevet:
17.01.1996 Bulletin 1996/03

(51) Int Cl.⁶: H04M 9/08, H04B 3/23

(21) Numéro de dépôt: 90402318.1

(22) Date de dépôt: 20.08.1990

(54) **Dispositif de traitement d'écho notamment acoustique dans une ligne téléphonique**

Anordnung zur Echoverarbeitung, insbesondere akustisch, für Fernsprechleitung

Arrangement for echoprocessing, especially acoustic, in a telephone line

(84) Etats contractants désignés:
DE GB SE

(30) Priorité: 18.08.1989 FR 8911026

(43) Date de publication de la demande:
20.02.1991 Bulletin 1991/08

(73) Titulaire: FRANCE TELECOM
F-75015 Paris (FR)

(72) Inventeurs:
• Jullien Jean-Pascal
F-22670 Pleumeur Bodou (FR)
• Le Tourneur, Grégoire
F-22700 St. Quay Perros (FR)

(74) Mandataire: Cabinet Martinet & Lapoux
F-78055 Saint Quentin en Yvelines Cédex (FR)

(56) Documents cités:
EP-A- 0 145 022          EP-A- 0 182 096
EP-A- 0 282 393          EP-A- 0 310 055
WO-A-86/03912            US-A- 4 752 903

• PROCEEDINGS TENCON 87, 1987, IEEE
REGION 10 CONFERENCE, Séoul, 25-28 août
1987, vol. 3, pages 38.3.1 - 38.3.5, IEEE, New
York, US; C.-C. HSU et al.: "A new joint echo
cancellation and decision feedback
equalization for digital substriber loops"

**Description**

La présente invention concerne le traitement d'un écho entre deux voies de transmission présentant entre elles un couplage.

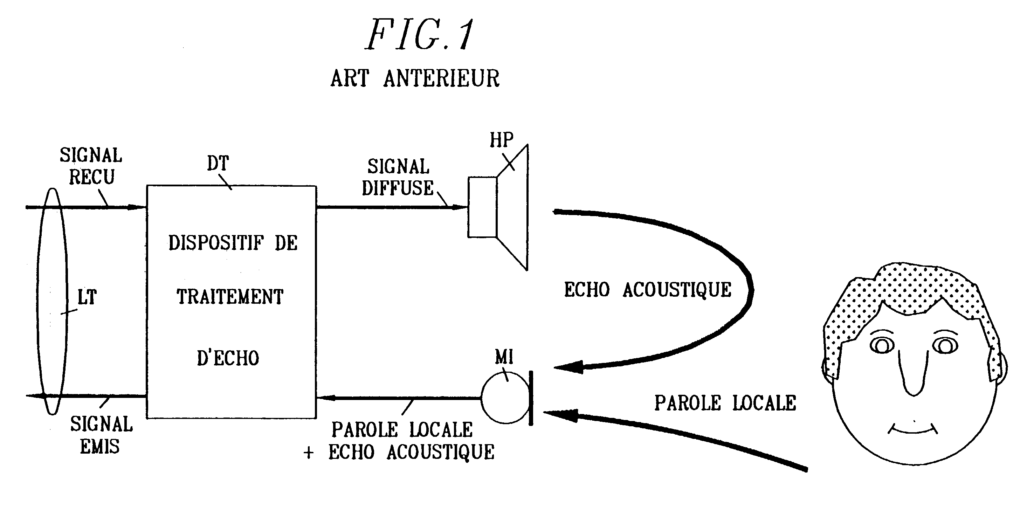

En particulier, l'invention est destinée à supprimer l'écho acoustique dans un poste téléphonique ou autre terminal téléphonique du type mains-libres. Comme montré à la Fig. 1, le poste possède un ou plusieurs haut-parleurs HP ainsi qu'un ou plusieurs microphones MI, tous fixes. L'écho acoustique est le signal capté par le(s) microphone(s) du poste venant du (des) haut-parleur(s) par couplage acoustique. Ce couplage peut être dû à une transmission solidique ou aérienne ; dans ce dernier cas, l'environnement du terminal joue un rôle déterminant.

Un dispositif de traitement d'écho DT est interconnecté dans ia voie de réception du poste recevant un signal recu de la ligne téléphonique d'abonné LT en un signal diffusé par haut-parleur(s), et dans la voie d'émission du poste transmettant un signal microphonique capté par le(s) microphone(s) et transmis en un signal émis dans la ligne LT. Le signai microphonique est la somme du signal de parole local provenant de l'abonné local et d'un écho acoustique provenant du (des) haut-parleur(s).

Pour les terminaux de transmission tels que poste mains-libres et terminal de groupe ou téléconférence, l'écho acoustique peut occasionner une gêne importante à l'interlocuteur distant, surtout en présence de grands délais de transmission entre l'abonné local et l'interlocuteur à travers le réseau téléphonique. La réduction de cet écho à un niveau satisfaisant dans le signal émis constitue la fonction principale du dispositif de traitement d'écho DT.

Classiquement, selon une première variante connue, un dispositif DT utilise la commutation de gains entre ies voies pour affaiblir fortement l'écho. Des gains variables sont appliqués aux signaux de réception et d'émission pour assurer globalement un gain correcteur qui diminue la valeur du couplage acoustique. Ceci introduit une gêne dans la conversation due à la transmission des signaux dans la ligne LT proche du mode d'alternat.

Pour éviter cela, un second type de dispositif de-traitement d'écho fait appel à la technique d'identification adaptative qui réalise une annulation d'écho par soustraction d'un écho estimé à partir d'une estimation d'un modèle du couplage acoustique. Les performances de l'annulation dépendent donc directement de la qualité d'estimation du couplage acoustique. La nature du couplage acoustique exige que le modèle prenne en compte un grande nombre de réflexions acoustiques dues à l'environnement du poste.

Le dispositif doit estimer une fraction importante de la réponse impulsionnelle qui représente le couplage acoustique. Les algorithmes classiques d'identification adaptative ne fonctionnent pas sur des réponses impulsionnelles "longues" supérieures à la dizaine de millisecondes. La parole locale est vue comme un bruit par l'algorithme et perturbe fortement l'identification. L'algorithme peut aussi distordre la parole locale qui doit être transmise idéalement sans perturbation. L'environnement du poste est variable, dû par exemple au mouvement des personnes autour du poste, et l'algorithme doit "suivre ces changements" pour rester efficace.

La demande de brevet européen EP-A-0 182 096 décrit un appareil de traitement d'écho acoustique dans lequel la mise à jour des coefficients de filtrage d'un annuleur d'écho est inhibée et activée respectivement selon qu'un signal de parole local est produit et n'est pas produit par l'abonné local. En pratique, cela permet de mettre à jour les coefficients de l'annuleur d'écho uniquement lorsqu'un signal est reçu. Selon cette demande de brevet, la présence ou l'absence d'un signal de parole local n'est détectée que dans le signal microphonique, c'est-à-dire dans la somme du signal de parole local et du signal d'écho. Cette détection est obtenue au moyen d'un détecteur à seuil adaptatif dont le seuil de détection est uniquement fonction du signal reçu. En effet, si un détecteur à seuil constant était utilisé, un écho du signal reçu pourrait inhiber la mise à jour des coefficients de l'annuleur dans les cas où le signal reçu a un niveau élevé. Cette adaptation du seuil de détection en fonction du signal reçu ne garantit pas une convergence des coefficients de l'annuleur d'écho vers des valeurs optimales.

La présente invention vise à remédier aux inconvénients précités de la technique antérieure en fournissant un dispositif de traitement d'écho perfectionné dans lequel, comparativement aux dispositifs existants, la parole locale est mieux distinguée d'un échc acoustique, et les coefficients de filtrage de l'annuleur d'écho dépendent plus précisément de l'écho acoustique.

A cette fin, un dispositif pour traiter un écho réel entre des première et seconde voies de transmission est tel que défini dans la revendication 1 ou dans la revendication 2.

La gestion de l'annulation d'écho ne s'effectue donc que lorsque le signal capté par le(s) microphone(s) pour un terminal téléphonique du type mains-libres n'est constitué que par un écho acoustique et donc lorsque la parole de l'abonné local est absente. Pour ce faire, les moyens pour détecter doivent distinguer le second signal et un résidu d'écho dans le troisième signal de manière à signaler si le niveau détecté du troisième signal est dû à un écho mal annulé ou à un signal de parole et/ou de bruit ambiant. Les moyens pour détecter font appel à des comparaisons entre les premier et troisième signaux et des premier et second seuils selon des caractéristiques de l'invention. Au moins l'un de ces seuils peut être variable et dépendre d'un état de convergence de l'algorithme d'identification d'écho, comme énoncé dans les revendications 3 à 5.

L'invention vise accessoirement à commander les gains des premier et troisième signaux non pas en fonction d'une comparaison des niveaux de ces signaux, mais en fonction des valeurs absolues de ces signaux, et plus particulièrement de comparaisons des enveloppes de ces signaux à des seuils prédéterminés respectifs. A cette fin, un dispositif de traitement d'écho selon l'invention comprend, en outre, un premier atténuateur variable dans la première voie pour atténuer le premier signal, un second atténuateur variable dans la seconde voie pour atténuer le troisième signal, et des moyens pour commander les atténuations dans les atténuateurs en fonction des résultats de comparaisons indépendantes entre l'enveloppe du premier signal et le premier seuil et entre l'enveloppe du troisième signal et le second seuil effectuées par les premiers et seconds moyens détecteurs.

D'autres caractéristiques relatives aux atténuations des premier et troisième signaux sont énoncées dans les revendications 7 à 9.

D'autres avantages et caractéristiques de l'invention apparaîtront plus clairement à la lecture de la description suivante de plusieurs réalisations préférées de l'invention, en référence aux dessins annexés correspondants dans lesquels :

- la Fig. 1 est un schéma de principe du traitement d'un écho acoustique dans un poste téléphonique ;

- la Fig. 2 est un bloc-diagramme d'un dispositif de traitement d'écho selon une première réalisation de l'invention ; et

- la Fig. 3 est un bloc-diagramme d'un dispositif de traitement d'écho selon une seconde réalisation de l'invention.

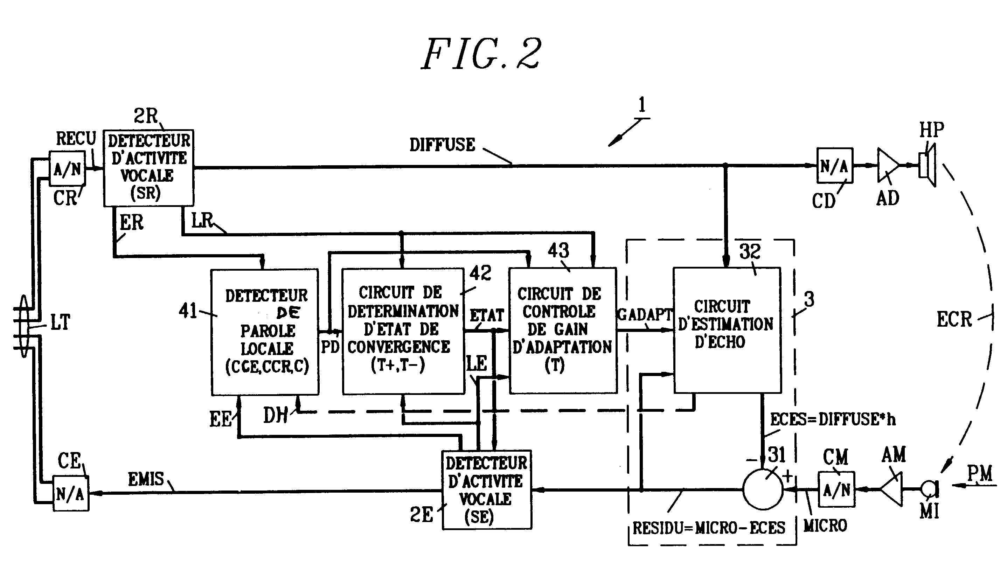

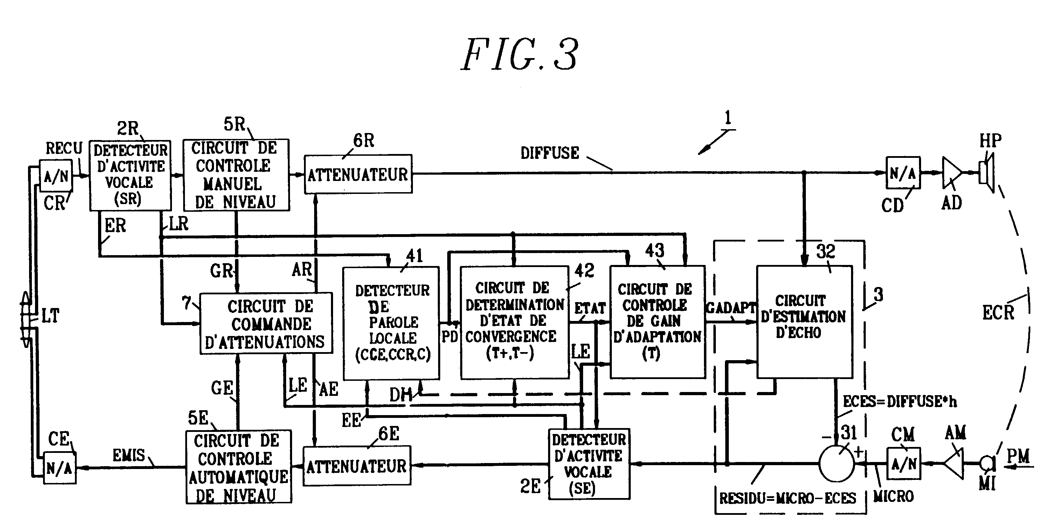

On se réfère dans la suite à des réalisations illustrées aux Figs. 2 et 3 qui concernent le traitement d'un écho particulier, tel que l'écho acoustique entre un haut-parleur HP - ou plusieurs haut-parleurs connectés en parallèle - et un microphone MI - ou plusieurs microphones connectés en parallèle - d'un poste téléphonique ou autre terminal analogue du type main-libre. Le poste est raccordé à une ligne téléphonique LT à 4 fils selon la Fig. 2, ou à deux fils à travers un coupleur différentiel.

Le dispositif de traitement d'écho acoustique 1 comprend une première voie de transmission, dite voie de réception, qui reçoit un signal RECU d'un abonné distant à travers le réseau téléphonique et la ligne téléphonique d'abonné LT pour retransmettre un signal DIFFUSE à diffuser par le haut-parleur HP. Une seconde voie de transmission constitue une voie d'émission de sens contraire à la voie de réception dans le dispositif 1. La seconde voie reçoit un signal microphonique MICRO qui est capté par le microphone MI et qui est composé d'un signal d'écho acoustique réel ECR et/ou d'un signal de parole PM d'abonné local. La voie de réception retransmet un signal EMIS vers la ligne téléphonique LT dans lequel le signal d'écho est très atténué, voire quasi-supprimé.

En pratique, le dispositif 1 traite les signaux précités sous forme numérique. En conséquence, le dispositif 1 comprend deux convertisseurs analogiques-numériques CR et CM matérialisant des entrées des voies de réception et d'émission, et deux convertisseurs numériques-analogiques CD et CE matérialisant des sorties des voies de réception et d'émission, respectivement. Deux amplificateurs AD et AM peuvent être prévus entre la sortie du convertisseur CD et le haut-parleur HP, et entre le microphone MI et l'entrée du convertisseur CM, respectivement. Les convertisseurs fonctionnent avec une fréquence d'échantillonnage Fe égale à 8 kHz pour des signaux de parole en bande étroite, ou à 16 kHz pour des signaux de parole plus fidèles en bande élargie.

Dans le dispositif 1 montré à la Fig. 2, la voie de réception comprend un détecteur d'activité vocale 2R recevant le signal numérique RECU de la sortie du convertisseur CR et ayant une sortie reliée au haut-parleur HP à travers le convertisseur CD et l'amplificateur AD. La voie d'émission comprend, selon la Fig. 2, un soustracteur 31 et un autre détecteur d'activité vocale 2E. Une entrée directe (+) du soustracteur 31 est reliée à la sortie du microphone MI à travers l'amplificateur AM et le convertisseur CM. Une sortie du soustracteur 31 est reliée à une entrée de signal RESIDU du détecteur 2E. Le signal numérique EMIS est transmis par une sortie du détecteur 2E dans la ligne LT à travers le convertisseur CE.

Une entrée inverse (-) du soustracteur 31 est reliée à l'entrée du convertisseur CD recevant le signal DIFFUSE, à travers un circuit d'estimation d'écho 32. Le circuit d'estimation 32 reçoit également le signal RESIDU de la sortie du soustracteur 31, si bien que les circuits 31 et 32 constituent une boucle d'asservissement analogue à celle d'un annuleur d'écho 3. Toutefois, comme on le verra dans la suite, le circuit d'estimation d'écho 32 ne comprend pas qu'un simple filtre de transfert autoadaptatif.

Comme cela apparaît à la Fig. 2, le dispositif de traitement d'écho 1 comprend, en outre, trois circuits 41, 42 et 43 propres à l'invention pour commander la vitesse d'identification de l'écho dans le circuit 32 en fonction des signaux RECU et RESIDU et de signaux logiques LR et LE établis par les détecteurs 2R et 2E.

On rappelle qu'un filtre transversal numérique autoadaptatif, tel que celui inclus dans le circuit 32, a pour but de produire un signal d'écho ECES estimé à partir d'échantillons du signal DIFFUSE et d'échantillons du signal RESIDU afin qu'il soit le plus proche possible du signal d'écho réel ECR capté par le microphone MI et résultant du bouclage acoustique entre le haut-parleur HP et le microphone.

Le filtre transversal est caractérisé par un nombre I déterminé de coefficients de corrélation $h^i_n$, où i est un entier désignant un coefficient d'indice compris entre 1 et l, et n est un indice entier désignant un même instant à partir d'un instant de référence. Les instants ... n-1, n, n+1,... sont en pratique à la fréquence d'échantillonnage Fe des signaux DIFFUSE et RESIDU, mais les différentes variables calculées dans les circuits 2E, 2R, 32 et 41 à 43 sont actualisées toutes les millisecondes en fonction des signaux RECU, DIFFUSE et MICRO et donc RESIDU.

Le dispositif de traitement comprend bien entendu classiquement une base de temps, de préférence téléalimentée par le courant dans la ligne LT, pour produire divers signaux d'horloge nécessaires aux fonctionnements des circuits précités.

Les coefficients $h^1_n$ à $h^l_n$ représentent une fonction de corrélation $h_n$ à l'instant n, dont la convolution avec le signal DIFFUSE, représenté par les échantillons de celui-ci aux l instants précédant l'instant n, forme le signal d'écho estimé ECES. Lorsque le signal estimé ECES a atteint environ 90 % du signal d'écho réel ECR, et donc que le signal RESIDU est quasiment nul - en l'absence de signal de parole microphonique PM=0 -, le filtre a "convergé". Ainsi, le filtre est caractérisé par une fonction de transfert qui définit un temps de convergence entre l'instant où les coefficients $h^i$ sont initialement à zéro et l'instant où ces coefficients atteignent des valeurs limites correspondant à un signal RESIDU=ECR-ECE, dit également signal d'erreur, ayant une amplitude' minimale. L'invention vise ainsi principalement à influer sur ce temps de convergence, et plus précisément sur "l'état de convergence" ETAT du filtre traduisant un état plus ou moins éloigné des coefficients de corrélation $h^i$ par rapport à leur valeur limite. Si les circuits 41, 42 et 43 augmentent les incréments des coefficients $h^i$, le temps de convergence diminue et la convergence s'accélère ; ceci est exécuté lorsque le signal RESIDU est élevé, notamment lors d'une prise de parole après un long silence. Au contraire, les circuits 41, 42 et 43 décident de diminuer les incréments des coefficients $h^i$, c'est-à-dire d'augmenter le temps de convergence, lorsque le signal RESIDU est très proche de son amplitude minimale.

Le circuit d'estimation d'écho 32 estime ainsi l'écho ECES par un algorithme classique d'identification adaptative d'écho, comme le gradient stochastique normalisé à la variance. Pour obtenir une atténuation suffisante de l'écho ECR nécessaire au bon fonctionnement du dispositif, l'écho ECR pouvant être supérieur au niveau de parole microphonique locale PM, il faut identifier le couplage acoustique entre les transducteurs HP et MI sur une réponse impulsionnelle de plusieurs dizaines de millisecondes. Une telle longueur implique un mécanisme particulier de contrôle de l'algorithme d'identification propre à l'invention.

L'algorithme est piloté par un paramètre GADAPT fourni par le circuit 43. Le paramètre GADAPT est un facteur multiplicatif du gain normalisé, dépendant de la variable ETAT. La valeur de ce facteur, lorsqu'elle est différente de zéro, contrôle la vitesse d'adaptation, et lorsqu'elle est égale à zéro, bloque l'identification.

En entrée reliée à la voie de réception, le circuit 32 comprend des moyens pour estimer la variance Var(DIFFUSE) du signal DIFFUSE. Puis une unité arithmétique dans le circuit 32 calcule chacun des coefficients de corrélation $h^i_n$ du filtre à chaque instant n selon la relation : $h^i_n = h^i_{n-1} + GADAPT(ETAT) . DIFFUSE_{n-1} . RESIDU_n / (Var(DIFFUSE)_{n-1} \times l)$ où $RESIDU_n = MICRO_n - (DIFFUSE_{n-1} * h_{n-1})$, le signe * indiquant l'opération de convolution.

Les détecteurs d'activité vocale 2R et 2E détectent la présence de signaux dans les voies de réception et d'émission par rapport à des seuils respectifs SR et SE. Les détecteurs 2R et 2E sont indépendants.

Toutefois, au moins l'un des détecteurs, tel que le détecteur 2E dans la voie d'émission selon la Fig. 2, a le seuil de décision respectif SE qui dépend de l'état de convergence du filtre dans le circuit 32. Cet état de convergence désigné par une variable ETAT est défini plus précisément dans la suite. Cette variable ETAT peut évoluer de manière continue ou de manière discrète. On supposera dans la suite que la variable ETAT évolue de manière discrète et a huit valeurs entières 1 à 8.

Le premier détecteur 2R calcule l'enveloppe ER du signal reçu et la compare au seuil SR qui est supposé constant, bien que, selon une autre variante, il puisse dépendre de la variable ETAT. Si on désigne par $L_{dB}$ un niveau moyen de parole, par exemple - 40 dB par rapport à la valeur crête dans un codeur d'un convertisseur analogique-numérique CR, CM, le seuil SR est de préférence égal à $Ld_{dB}$ - 6 dB. Le seuil $L_{dB}$ est choisi pour éviter les distorsions au cours des conversions analogiques-numériques dans les convertisseurs CR et CM. La variable d'enveloppe reçue ER est déduite de l'opération récurrente suivante effectuée par le détecteur 2R :

$$ER_n = ER_{n-1} + (|RECU_n| - ER_{n-1})/256$$

Une valeur 256 de la constante d'intégration est choisie afin d'obtenir un lissage convenable de l'enveloppe ER du signal RECU et d'éviter toute variation brusque dans celle-ci. En fonction du signal ER, le détecteur 2R fournit un signal logique LR dont l'état "1" indique la présence d'un signal de parole dans la voie de réception, en sortie du convertisseur analogique-numérique CR, soit
LR="1" si ER > SR.

Le second détecteur 2E effectue des opérations similaires à celles du détecteur 2R, excepté que le seuil SE en dB dépend de la variable ETAT fournie par une sortie du circuit de détermination d'état de convergence 42, selon le tableau suivant :

| ETAT | 1 | 2 | 3 | 4 | 5 | 6 | 7 | 8 | 9 |
|------|---|---|---|---|---|---|---|---|---|
| SE | $L_{dB}+40$ | $L_{dB}+6$ | $L_{dB}+4$ | $L_{dB}+2$ | $L_{dB}$ | $L_{dB}-2$ | $L_{dB}-4$ | $L_{dB}-6$ | $L_{dB}-8$ |

Pour l'état le plus convergent, ETAT = 8, le seuil SE est égal à SR = $L_{dB}$ - 6. La valeur ETAT=9 n'a pas d'existence réelle, mais est nécessaire en raison de la relation LE(ETAT+2)="0" qui est présentée plus loin à propos de l'évolution de la variable ETAT.

L'enveloppe EE du signal RESIDU dans la voie d'émission, et le signal logique correspondant LE indiquant à l'état "1" la présence d'un signal de parole en émission sont déduits des relations suivantes :

$$EE_n = EE_{n-1} + (|RESIDU_n| - EE_{n-1})/256 ;$$

$$LE\,(ETAT)="1" \text{ si } EE_n > SE(ETAT).$$

Les signaux d'enveloppe ER et EE sont appliqués au circuit détecteur de parole 41, et les signaux logiques LR et LE sont appliqués aussi bien au circuit de détermination d'état de convergence 42 qu'au circuit de contrôle de gain d'adaptation 43.

Le signal logique LE produit par le détecteur 2E indique à l'état "1" la présence d'un signal RESIDU sans distinguer dans celui-ci les deux signaux composants, une différence d'écho ECR-ECES et le signal de parole microphonique PM. Si LE="1" est dû à un écho acoustique mal annulé ECR-ECES≠0, l'identification de l'écho doit être améliorée et par suite l'algorithme dans les circuits 42 et 43 doit être poursuivi. Si par contre, LE="1" est dû à la présence effective d'un signal de parole microphonique PM, le circuit 41 bloque, selon l'invention, l'identification d'écho dans le circuit 42 ; en effet, si, au contraire, un tel blocage n'est pas réalisé comme selon la technique antérieure, les coefficients du filtre dans l'annuleur continueraient à évoluer, ce qui distordrait la parole PM et par conséquent perturberait l'identification de l'écho lui-même suite à la boucle d'asservissement.

Deux méthodes sont envisagées selon l'invention pour détecter de la parole microphonique locale PM dans le signal RESIDU, lorsque LE="1".

Selon une première méthode de détection, on remarquera que les enveloppes des signaux RECU et RESIDU sont toujours corrélées à court terme positivement. Ainsi, une corrélation à court terme des enveloppes très faible, par exemple en-dessous d'un seuil prédéterminé fixe CO, indique la présence de la parole locale. La première méthode peut être réalisée de la façon suivante. Le circuit 41 calcule des variables CCR et CCE en fonction des signaux d'enveloppe ER et EE délivrés par les détecteurs 2R et 2E selon les relations récurrentes suivantes :

$$CCR_n = CCR_{n-1} + (ER_n-CCR_{n-1})/2048 ;$$

$$CCE_n = CCE_{n-i} + (EE_n-CCE_{n-1})/2048$$

afin d'en déduire un coefficient de corrélation tel que : $C_n = C_{n-1} + [(ER_n-CCR_n)(EE_n-CCE_n) - C_{n-1}]/256$.

Un signal logique, PD = "1" est transmis par le circuit 41 au circuit 42, lorsque de la parole PM est détectée, ce qui se traduit par $C_n < CO$. Par exemple, le seuil CO est égal à $-10^{2(L_{dB}-24)/20}$.

Selon une deuxième méthode de détection de parole microphonique, on évalue le module DH du vecteur de correction dh pour l'algorithme d'identification normalisé à chaque étape, soit à l'instant n : $h_n = h_{n-1}+dh$. La corrélation à court terme de l'enveloppe du module DH avec l'enveloppe ER du signal RECU est également comparée à un seuil prédéterminé pour savoir si le signal RESIDU est dû à une variation d'écho ou à une parole locale. Une valeur élevée de la corrélation indique une variation d'écho, et une faible valeur indique la présence d'une parole locale. Dans ce cas, la liaison EE entre les circuits 2E et 41 est remplacée par une liaison DH entre les circuits 32 et 41, comme indiqué au trait pointillé à la Fig. 2.

Comme déjà dit, l'état de convergence, ETAT, fourni par le circuit 42 indique la proximité du vecteur $h_n$ estimé à un vecteur $h'_n$ idéal qui représente le début de la réponse impulsionnelle du couplage acoustique. Cet état de convergence évolue indirectement en fonction des valeurs instantanées des signaux RECU et RESIDU. Ces valeurs instantanées ne sont pas utilisables directement : le signal RESIDU peut être dû aussi bien à un écho acoustique mal annulé qu'à de la parole locale.

Idéalement, l'écho acoustique ECR ne doit pas déclencher le détecteur d'activité vocale 2E dont le seuil SE dépend de la variable ETAT. S'il le déclenche, c'est-à-dire si LE="1" et PD="0", la variable ETAT doit être diminuée, afin de diminuer la sensibilité du détecteur 2E et donc augmenter le seuil SE, et ainsi relancer à terme l'adaptation par le circuit 43. Au contraire, si l'écho acoustique ECR ne déclenche pas le détecteur 2E, c'est-à-dire si LE="0", pour un seuil SE à un état supérieur, par exemple ETAT+2 lorsque la variable ETAT a une évolution discrète, alors la variable ETAT est augmentée progressivement afin de diminuer le seuil SE et de faire converger le vecteur $h_n$ vers le vecteur idéal $h'_n$.

Lorsque la variable ETAT évolue pas à pas, les deux situations précédentes sont représentées par l'incrémentation effectuée toutes les millisecondes des valeurs $T_-$ et $T_+$ de deux compteurs internes au circuit 42 comme suit :

si PD="0" et LR="1" et si LE(ETAT)="1", alors $T_- = T_- + 1$ et $T_+$=0 ;

si LR="1" et si LE(ETAT+2)="0", alors $T_+ = T_+ + 1$, PD étant donc à "0".

Les comptes T- et T+ sont limités à un compte maximum TMAX entraînant la remise à zéro des deux compteurs et la modification de la variable ETAT, ici comprise entre 0 et 9.

si $T_- >$ TMAX, alors ETAT=ETAT-1, $T_+$=0, et $T_-$=0 ;

si $T_+ >$ TMAX, alors ETAT=ETAT+1, $T_+$=0, et $T_-$=0.

Les temporisations assurent la stabilité de la variable ETAT, et doivent être limitées pour permettre une reprise de convergence suffisamment rapide. En pratique, la modification de la variable ETAT intervient toutes les 400 mises à jour des autres variables, soit TMAX=400 ms. Dès que de la parole est détectée, PD="1", le premier compteur est remis à zéro : $T_-$="0".

Lorsque la variable ETAT évolue de manière continue, les deux situations précédentes sont représentées par la valeur $T_c$ d'un compteur interne au circuit 42, qui est déterminé de la manière suivante :

si LR="1" et si LE(ETAT)="1", alors $T_c$=$T_c$+1; si $T_c >$ TMAX alors la variable ETAT est décrémentée : ETAT=ETAT-1 ;

si LR="1" et si LE(ETAT)="0", alors la variable ETAT est incrémentée ETAT=ETAT+1 et $T_c$=0.

De même, si de la parole est détectée, PD="1", alors $T_c$=0.

Le circuit de contrôle de gain d'adaptation 43 stoppe l'adaptation en présence d'une parole locale PM pour éviter de la distordre, c'est-à-dire dès que le détecteur 2E est déclenché, soit LE="1" et PD="1". Cet arrêt momentané de l'adaptation n'est possible que parce que l'écho acoustique ECR à lui seul ne déclenche pas le détecteur 2E. Le filtre dans le circuit 32 doit ainsi atténuer suffisamment cet écho, et le dispositif 1 fonctionne d'autant mieux que l'état de convergence est élevé. Lorsque l'état de convergence est mauvais, par exemple ETAT=1, à la mise en marche du dispositif, les contraintes de blocage sont très lâches pour arriver rapidement aux meilleurs états de convergence. Un processus de temporisation, utilisant le compte T d'un compteur interne inclus dans le circuit 43, est prévu pour éviter de reprendre l'adaptation pendant des courts silences de la parole microphonique locale PM. En estimant que les silences entre syllabes sont inférieurs à T0=200 ms, on s'affranchit de ce problème.

Le circuit 43 effectue les opérations suivantes :

si LE(ETAT)="1" alors T=0, sinon si LR="1" alors T=T+1 ;
si T > T0 et LR="1", l'adaptation est valide et GADAPT dépend de la variable ETAT suivant le tableau suivant, sinon, lorsque l'adaptatiod n'est pas valide, GADAPT est mis à zéro.

Théoriquement, l'écho résiduel ECR-ECES après convergence est proportionnel au gain d'adaptation de l'algorithme d'identification GADAPT. Ce gain est donc fonction de l'état de convergence ETAT, et diminue lorsque ce dernier augmente.

Par exemple, lorsque la variable ETAT évolue pas à pas, les valeurs de GADAPT sont les suivantes :

| ETAT | 1 | 2 | 3 | 4 | 5 | 6 | 7 | 8 |
|---|---|---|---|---|---|---|---|---|
| GADAPT | 0,25 | 0,25 | 0,125 | 0,125 | 0,0625 | 0,0625 | 0,03125 | 0,03125 |

Bien que le dispositif de traitement d'écho selon la Fig. 2 ait été décrit particulièrement pour son insertion dans un poste téléphonique, en extrémité d'une ligne téléphonique d'abonné, ce dispositif peut être introduit en tant que suppresseur d'écho dans toute ligne téléphonique, par exemple à proximité d'un transformateur ou coupleur différentiel entre une section de ligne à 4 fils et une section de ligne à 2 fils. L'écho est alors directement la contribution du signal transmis dans un sens dans le signal transmis dans l'autre sens à travers le transformateur ou coupleur différentiel.

En se référant maintenant à la Fig. 3, un dispositif de traitement d'écho comporte, outre les circuits 2R, 2E, 31, 32 et 41 à 43 décrits ci-dessus, également deux ensembles à circuit de contrôle de niveau de signal vocal 5R, 5E et atténuateur variable 6R, 6E, associés respectivement aux voies de réception et d'émission et coopérant avec un circuit de commande d'atténuations 7.

Les circuits 5R et 6R sont connectés en série entre la sortie du détecteur d'activité vocale 2R et les entrées du convertisseur numérique-analogique CD et du circuit d'estimation d'écho 32. Les circuits 5E et 6E sont connectés en série entre la sortie de signal RESIDU du détecteur 2E et l'entrée du convertisseur numérique-analogique CE.

Le circuit 5E est un circuit de contrôle automatique du niveau d'émission qui "normalise" le niveau de signal EMIS via le convertisseur CE de manière à assurer à l'interlocuteur distant un niveau d'écoute correct ; en effet l'interlocuteur distant ne dispose pas forcément d'un moyen de réglage de niveau d'écoute, tel que le circuit 5R. Dans le cas d'un poste mains-libres, le positionnement du locuteur par rapport au(x) microphone(s) MI peut faire varier de façon importante le niveau capté par le(s) microphone(s) MI. Le circuit 5E ajuste en conséquence automatiquement le niveau de signal transmis en ligne au moyen d'une boucle de contre-réaction de gain variable GE variant en dépendance des comparaisons du niveau signal sortant de l'atténuateur 6E et de deux seuils de niveau prédéterminés.

Le circuit de contrôle du niveau d'écoute 5R assure une fonction analogue au circuit 5E, en dépendance de l'atténuation du signal RECU entre l'interlocuteur distant et le locuteur local à travers le réseau téléphonique. Toutefois, le gain GR produit par le circuit 5R est réglable par le locuteur, classiquement par l'intermédiaire d'un potentiomètre inclus dans le circuit 5R.

Les valeurs des gains GR et GE sont délivrées sous forme numérique au circuit de contrôle d'atténuations 7 afin de calculer une atténuation globale constante :

A = N-GR-GE en dB,

où N est une constante qui dépend du poste téléphonique et qui assure la stabilité d'écoute de celui-ci. Dans la suite, les valeurs de gains, atténuations et niveaux de signal sont exprimées en dB.

L'atténuation globale A est égale à la somme des atténuations variables AR et AE transmises sous forme numérique par le circuit 7 aux atténuateurs 6R et 6E, soit A = AR+AE. Cette atténuation A est appliquée sur le couplage acoustique afin de diminuer le niveau d'écho ECR tout en assurant une stabilité entre les signaux RECU et EMIS, quel que soit l'état de convergence, ETAT.

Le circuit 7 reçoit également les signaux logiques LR et LE fournis respectivement par les détecteurs d'activité vocale 2R et 2E, dont l'un au moins, le signal LE, dépend de l'état de convergence ETAT.

Les valeurs d'atténuation AR et AE sont calculées par le circuit 7 selon les quatre relations suivantes :

- si LR="1" et LE(ETAT)="0", c'est-à-dire si l'interlocuteur distant parle seul,
     alors AR et AE tendent respectivement et rapidement vers 0 et A ;

- si LR="0" et LE(ETAT)="1", c'est-à-dire si le locuteur local parle seul, donc sans écho, MICRO = PM,
     alors AR et AE tendent respectivement et rapidement vers A et 0 ;

- si LR="1" et LE(ETAT)="1", c'est-à-dire si l'interlocuteur et le locuteur parlent, donc avec un écho,
     alors AR et AE tendent lentement vers A/2 ;

- si LR="0" et LE(ETAT)="0", c'est-à-dire si ni l'interlocuteur ni le locuteur parle,
     alors AR et AE tendent lentement vers A/2.

Le contrôle des atténuations dans les atténuateurs GR et GE effectué par le circuit 7 dépend donc, selon l'invention, des seuils SR et SE(ETAT) dans les détecteurs 2R et 2E, et ne dépend pas d'une comparaison entre les signaux dans les voies, ici les signaux RECU et RESIDU, comme selon la technique antérieure. En outre, la valeur de l'atténuation globale A ne dépend pas des performances de l'annuleur d'écho 3, c'est-à-dire du niveau de ECR-ECES, mais des enveloppes des signaux de voie dans les détecteurs 2R et 2E et particulièrement des valeurs de ces signaux.

Selon la Fig. 3, les niveaux des signaux sortant des voies sont alors les suivants :
DIFFUSE = RECU+GR-AR en dB
EMIS = RESIDU+GE-AE en dB.

Les réalisations illustrées aux Figs 2 et 3 comprennent des circuits numériques intégrés qui sont distincts pour effectuer les différentes fonctions inhérentes aux traitements de l'écho et du gain des signaux RECU et EMIS. Toutefois, la plupart des circuits effectuant des calculs, tels que les circuits 32, 41, 42, 43 et 7, peuvent être regroupés sous la forme d'un microprocesseur.

## Revendications

1. Dispositif pour traiter un écho réel entre des première et seconde voies de transmission, comprenant des moyens d'annulation d'écho (3) recevant un premier signal (RECU) dans la première voie (CR, CD) et un second signal (PM) et l'écho réel (ECR) dans la seconde voie (CM, CE) pour produire un troisième signal (RESIDU) contenant ledit second signal (PM) et une différence entre ledit écho réel (ECR) et un écho estimé (ECES), ledit écho estimé résultant d'une identification d'écho réel par filtrage adaptatif à partir des premier et troisième signaux des premiers moyens détecteurs (2R) pour produire une enveloppe (ER) du premier signal (RECU) et la comparer à un premier seuil (SR) et des seconds moyens détecteurs (2E) pour produire une enveloppe (EE) du troisième signal (RESIDU) et la comparer à un second seuil (SE) caractérisé en ce qu'il comprend des moyens (41) pour comparer une corrélation à court terme ($C_n$) entre lesdites enveloppes (ER, EE) avec un seuil prédéterminé (CO), et des moyens (42, 43) pour commander en gain (GADAPT) l'adaptation dans le filtrage des moyens d'annulation d'écho (3) de manière à modifier le gain d'adaptation (GADAPT ≠ 0) lorsque l'enveloppe du troisième signal (RESIDU) II est supérieure au second seuil (SE) et lorsque ladite corrélation ($C_n$) est supérieure au seuil prédéterminé (CO) et à interdire toute modification du filtrage (GADAPT =0) lorsque l'enveloppe du troisième signal (RESIDU) est inférieure au second seuil (SE) ou lorsque ladite corrélation ($C_n$) est inférieure au seuil prédéterminé (CO).

2. Dispositif conforme à la revendication 1, caractérisé en ce que les moyens pour comparer une corrolation sont remplacés par des moyens (41) pour comparer une corrélation à court terme entre ladite enveloppe (ER) du premier signal (RECU) et le module d'un vecteur de correction d'algorithme d'identification (DH) fourni par les moyens d'annulation d'écho (3), avec un seuil prédéterminé (CO).

3. Dispositif conforme à la revendication 1 ou 2, caractérisé en ce que les moyens pour commander en gain d'adaptation comprennent des moyens (42) pour déterminer un état de convergence (ETAT) du filtrage dans les moyens d'annulation (3) en fonction des comparaisons (LR, LE) des enveloppes des premier et troisième signaux (RECU, RESIDU) respectivement avec les premier et second seuil (SR, SE) afin que le gain d'adaptation diminue lorsque l'enveloppe du troisième signal (RESIDU) est inférieure au second seuil (SE) ou lorsque ladite corrélation ($C_n$) est inférieure au seuil prédéterminé (CO) et afin que le gain d'adaptation augmente lorsque l'enveloppe du troisième signal (RESIDU) est supérieure au second seuil (SE) et lorsque ladite corrélation ($C_n$) est supérieure au seuil prédéterminé (CO).

4. Dispositif conforme à la revendication 3, caractérisé en ce que l'un desdits premier et second seuils (SR, SE) est variable en fonction dudit état de convergence (ETAT).

5. Dispositif conforme à la revendication 4, caractérisé en ce que ledit seuil variable (SE) augmente et diminue lorsque l'état de convergence (ETAT) diminue et augmente, respectivement.

6. Dispositif conforme à l'une quelconque des revendications 1 à 5, caractérisé en ce qu'il comprend en outre un premier atténuateur variable (6R) dans la première voie pour atténuer le premier signai (RECU), un second atténuateur variable (6E) dans la seconde voie pour atténuer le troisième signal (RESIDU), et des moyens (7) pour commander les atténuations (AR, AE) dans les atténuateurs en fonction des résultats de comparaisons indépendantes entre l'enveloppe du premier signal (RECU) et le premier seuil (SR) et entre l'enveloppe du troisième signal (RESIDU) et le second seuil (SE) effectuées par les premiers et seconds moyens détecteurs (2R, 2E).

7. Dispositif conforme à la revendication 6, caractérisé en ce que la somme des première et seconde atténuations (AR, AE) est une constante (A) et en ce que, pour des atténuations exprimées en décibel,

   - les première et seconde atténuations tendent rapidement et respectivement vers zéro et la constante lorsque les enveloppes des premier et troisième signaux (RECU, RESIDU) sont respectivement supérieur et inférieur aux premier et second seuils (SR, SE),

   - les première et seconde atténuations tendent rapidement et respectivement vers la constante et zéro lorsque les enveloppes des premier et troisième signaux sont respectivement inférieur et supérieur aux premier et second seuils,

   - les première et seconde atténuation tendent toutes deux lentement vers la moitié (A/2) de la constante lorsque les enveloppes des premier et troisième signaux sont respectivement supérieurs aux premier et second seuils, et

   - les première et seconde atténuation tendent toutes deux lentement vers la moitié (A/2) de la constante lorsque les enveloppes des premier et troisième signaux sont respectivement inférieurs aux premier et second seuils.

8. Dispositif conforme à la revendication 6 ou 7, caractérisé en ce qu'au moins l'un desdits premier et second seuils (SR, SE) dépend d'une variable d'état de convergence de filtrage (ETAT) fournie par les moyens pour commander en gain d'adaptation (42, 43).

9. Dispositif conforme à l'une quelconque des revendications 6 à 8, caractérisé en ce qu'il comprend des premier et second moyens d'amplification (5R, 5E) respectivement interconnectés en entrée et sortie des première et seconde voies et ayant des premier et second gains respectifs (GR, GE) fournis aux moyens pour commander les atténuations (7), la somme (A) desdites première et seconde atténuations (AR, AE) étant proportionnelle à la somme des premier et second gains.

**Patentansprüche**

1. Anordnung zur Verarbeitung eines reellen Echos zwischen dem ersten und dem zweiten übertragungskanal beinhaltend Mittel zur Annulierung des Echos (3), die ein erstes Signal (RECU) in dem ersten Kanal (CR, CD) und ein zweites Signal (PM) und das reelle Echo (ECR) im zweiten Kanal (CM, CE) empfangen, um ein drittes Signal (RESIDU) zu erzeugen, das besagtes zweites Signal (PM) und einen Unterschied zwischen besagtem reellen Echo (ECR) und einem geschätzten Echo (ECES) enthält, wobei sich besagtes geschätztes Echo aus einer Identifizierung des reellen Echos durch adaptatives Filtrieren, ausgehend vom ersten und dritten Signal, ergibt, erste Erkennungsmittel (2R) um eine Hülle (ER) des ersten Signals (RECU) zu erzeugen und sie mit einer ersten Schwelle (SR) zu vergleichen, und zweite Erkennungsmittel (2E), um eine Hülle (EE) des dritten Signals (RESIDU) zu erzeugen und sie mit einer zweiten Schwelle (SE) zu vergleichen, dadurch gekennzeichnet, daß sie Mittel (41) zum Vergleichen einer kurzfristigen Korrelation ($C_n$) zwischen besagten Hüllen (ER, EE) mit einer vorgegebenen Schwelle (CO) enthält, sowie Mittel (42, 43) um mit Gewinn (GADAPT) die Anpassung beim Filtrieren der Mittel zur Annulierung des Echos (3) zu steuern, damit der Anpassungsgewinn (GADAPT = 0) geändert wird, wenn die Hülle des dritten Signals (RESIDU) größer als die zweite Schwelle (SE) ist und wenn besagte Korrelation ($C_n$) größer als die vorgegebene Schwelle (CO) ist, und damit jegliche Änderung des Filtrierens (GADAPT = 0) verboten wird, wenn die Hülle des dritten Signals (RESIDU) kleiner als die zweite Schwelle (SE) ist, oder wenn besagte Korrelation ($C_n$) kleiner als die vorgegebene Schwelle (CO) ist.

2. Anordnung nach Anspruch 1, dadurch gekennzeichnet, daß die Mittel, um eine Korrelation zu vergleichen, durch Mittel (41), um eine kurzfristige Korrelation zwischen besagter Hülle (ER) des ersten Signals (RECU) und dem Modul eines Vektors zur Korrektur eines Identifizierungsalgorithmus (DH), der von Mitteln zur Annulierung des Echos (3) geliefert wird, mit einer vorgegebenen Schwelle (CO) zu vergleichen.

3. Anordnung nach dem Anspruch 1 oder 2, dadurch gekennzeichnet, daß die Mittel zur Steuerung der Anpassung mit Gewinn Mittel (42) beinhalten zur Bestimmung eines Konvergenz-Zustands (ETAT) des Filtrierens in den Mitteln zur Annulierung (3) in Abhängigkeit von Vergleichen (LA, LE) der Hüllen des ersten und des dritten Signals (RECU, RESIDU) jeweils mit der ersten und der zweiten Schwelle (SR, SE), damit der Anpassungsgewinn nachläßt, wenn die Hülle des dritten Signals (RESIDU) kleiner als die zweite Schwelle (SE) oder wenn besagte Korrelation ($c_n$) kleiner als die vorgegebene Schwelle (CO) ist und damit der Anpassungsgewinn zunimmt, wenn die Hülle des dritten Signals (RESIDU) größer als die zweite Schwelle (SE) ist oder besagte Korrelation ($C_n$) größer als die vorgegebene Schwelle (CO) ist.

4. Anordnung nach Anspruch 3, dadurch gekennzeichnet, daß die eine der besagten ersten und zweiten Schwelle (SR, SE) mit besagtem Konvergenzzustand (ETAT) variiert.

5. Anordnung nach Anspruch 4, dadurch gekennzeichnet, daß besagte variable Schwelle (SE) zunimmt und abnimmt, wenn der Konvergenzzustand (ETAT) jeweils abnimmt und zunimmt.

6. Anordnung nach irgendeinem der Ansprüche 1 bis 5, dadurch gekennzeichnet, daß sie außerdem einen ersten variablen Dämpfer (6R) in dem ersten Kanal enthält, um das erste Signal (RECU) zu dämpfen, einen zweiten variablen Dämpfer (6E) in dem zweiten Kanal, um das dritte Signal (RESIDU) zu dämpfen, und Mittel (7) zur Steuerung der Dämpfungen (AR, AE) in den Dämpfern in Abhängigkeit von von den ersten und zweiten Erkennungsmitteln (2R, 2E) durchgeführten Ergebnissen von unabhängigen Vergleichen zwischen der Hülle des ersten Signals (RECU) und der ersten Schwelle (SR) und zwischen der Hülle des dritten Signals (RESIDU) und der zweiten Schwelle (SE).

7. Anordnung nach Anspruch 6, dadurch gekennzeichnet, daß die Summe der ersten und der zweiten Dämpfung (AR, AE) eine Konstante (A) ist und dadurch, daß für in Dezibel ausgedrückte Dämpfungen

- die erste und die zweite Dämpfungen schnell und jeweils zu Null und der Konstante neigen, wenn die Hüllen des ersten und des dritten Signals (RECU, RESIDU) jeweils größer und kleiner als die erste und die zweite

9

Schwelle (SR, SE) sind,

- die erste und die zweite Dämpfungen schnell und je zur Konstante und Null neigen, wenn die Hüllen des ersten und des dritten Signals jeweils kleiner und größer als die erste und die zweite Schwelle sind,

- die erste und die zweite Dämpfungen beide langsam zur Hälfte der Konstante (A/2) neigen, wenn die Hüllen des ersten und des dritten Signals jeweils größer als die erste und zweite Schwelle sind und

- die erste und die zweite Dämpfungen beide langsam zur Hälfte der Konstante (A/2) neigen, wenn die Hüllen des ersten und des dritten Signals jeweils kleiner als die erste und die zweite Schwelle sind.

8. Anordnung nach dem Anspruch 6 oder 7, dadurch gekennzeichnet, daß mindestens eine unter der besagten ersten und zweiten Schwelle (SR, SE) von einer Variabel des Konvergenzzustands des Filtrierens (ETAT) abhängt, die durch die Mittel zur Steuerung mit Anpassungsgewinn (42, 43) geliefert wird.

9. Anordnung nach irgendeinem der Ansprüche 6 bis 8, dadurch gekennzeichnet, daß sie erste und zweite Mittel zur Verstärkung (5R, 5E) enthält, die jeweils am Eingang und Ausgang des ersten und des zweiten Kanals verbunden sind, und die je erste und zweite Gewinne (GR, GE) haben, die den Mitteln zur Steuerung der Dämpfungen (7) geliefert werden, wobei die Summe (A) besagter ersten und zweiten Dämpfungen (AR, AE) proportional zu der Summe der ersten und zweiten Gewinne ist.

## Claims

1. Device for processing a real echo between first and second transmission channels, comprising echo cancelling means (3) receiving a first signal (RECU) in the first channel (CR,CD) and a second signal (PM) and the real echo (ECR) in the second channel (CM,CE) for producing a third signal (RESIDU) containing said second signal (PM) and a difference between said real echo (ECR) and an estimated echo (ECES), said estimated echo resulting from a real echo identification by adaptive filtration from the first and third signals, first detector means (2R) for producing an envelope (ER) of the first signal (RECU) and for comparing it to a first threshold (SR) and second detector means (2E) for producing an envelope (EE) of the third signal (RESIDU) and for comparing it to a second threshold (SE), characterized in that comprises means (41) for comparing a short-term correlation (Cn) between said envelopes (ER, EE) with a predetermined threshold (CO), and means (42,43) for gain-controlling (GADAPT) the adaptation in the filtration of said echo cancelling means (3) thereby modifying the adaptation gain (GADAPT ≠ O) when the envelope of the third signal (RESIDU) is more than the second threshold (SE) and when said correlation ($C_n$) is more than the predetermined threshold (CO) and prohibiting any filtration modification (GADAPT = O) when the envelope of the third signal (RESIDU) is less than the second threshold (SE) or when said correlation ($C_n$) is less than the predetermined threshold (CO).

2. Device according to claimed in claim 1, characterized in that the correlation comparing means are replaced by means (41) for comparing a short-term correlation between said envelope (ER) of the first signal (RECU) and the modulus of an identification algorithm correction vector (DH) supplied by the echo cancelling means (3) with a predetermined threshold (CO).

3. Device according to claim 1 or 2, characterized in that the adaptation gain controlling means comprise means (42) for determining a state of convergence (ETAT) of the filtration in the cancelling means (3) as a function of the comparisons (LR, LE) of the envelopes of the first and third signals (RECU, RESIDU) respectively with the first and second thresholds (SR, SE) so that the adaptation gain decreases when the envelope of the third signal (RESIDU) is less than the second threshold (SE) or when said correlation ($C_n$) is less than the predetermined threshold (CO) and so that the adaptation gain increases when the envelope of the third signal (RESIDU) is more than the second threshold (SE) and when said correlation ($C_n$) is more than the predetermined threshold (CO).

4. Device according to claim 3, characterized in that the one of said first and second thresholds (SR, SE) is variable as a function of said state of convergence (ETAT).

5. Device according to claim 4, characterized in that said variable threshold (SE) increases and decreases when said state of convergence (STATE) increases and decreases respectively.

6. Device according to any one of claims 1 to 5, characterized in that it further comprises a first variable attenuator (6R) in the first channel for attenuating the first signal (RECU), a second variable attenuator (6E) in the second channel for attenuating the third signal (RESIDU), and means (7) for controlling the attenuations (AR,AE) in the attenuators as a function of the results of independent comparisons between the envelope of the first signal (RECU) and the first threshold (SR) and between the envelope of the third signal (RESIDU) and the second threshold (SE) made by the first and second detector means (2R,2E).

7. Device according to claim 6, characterized in that the sum of the first and second attenuations (AR,AE) is a constant (A) and in that, for attenuations expressed in decibels,

- the first and second attenuations tend rapidly and respectively towards zero and the constant when the envelopes of the first and third signals (RECU, RESIDU) are respectively more than and less than the first and second thresholds (SR, SE),

- the first and second attenuations tend rapidly and respectively towards the constant and zero when the envelopes of the first and third signals are respectively less than and more than the first and second thresholds,

- the first and second attenuations slowly tend both towards half (A/2) the constant when the envelopes of the first and third signals are respectively more than the first and second thresholds, and

- the first and second attenuations slowly tend both towards half (A/2) the constant when the envelopes of the first and third signals are respectively less than the first and second thresholds.

8. Device according to claim 6 or 7, characterized in that at least one of said first and second thresholds (SR, SE) depends on a filtration convergence state variable (ETAT) supplied by the adaptation gain controlling means (42,43).

9. Device according to any one of claims 6 to 8, characterized in that it comprises first and second amplification means (5R,5E) respectively interconnected at input and output of the first and second channels and having first and second respective gains (GR,GE) supplied to the attenuation controlling means (7), the sum (A) of said first and second attenuations (AR,AE) being proportional to the sum of the first and second gains.

# FIG.1

## ART ANTERIEUR

SIGNAL
RECU

DT

SIGNAL
DIFFUSE

HP

DISPOSITIF DE
TRAITEMENT
D'ECHO

LT

ECHO ACOUSTIQUE

MI

SIGNAL
EMIS

PAROLE LOCALE
+ ECHO ACOUSTIQUE

PAROLE LOCALE

EP 0 413 641 B1

*FIG.2*

EP 0 413 641 B1

*FIG.3*

EP 0 413 641 B1